(19) Europäisches Patentamt
European Patent Office
Office européen des brevets

(11) **EP 4 535 761 A1**

(12) **EUROPÄISCHE PATENTANMELDUNG**

(43) Veröffentlichungstag:
**09.04.2025  Patentblatt 2025/15**

(21) Anmeldenummer: **23201780.6**

(22) Anmeldetag: **05.10.2023**

(51) Internationale Patentklassifikation (IPC):
***H04L 67/12*** *(2022.01)*

(52) Gemeinsame Patentklassifikation (CPC):
**H04L 67/12**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Robert Bosch GmbH**
**70442 Stuttgart (DE)**

(72) Erfinder: **Zafzouf, Ghassen**
**31134 Hildesheim (DE)**

(54) **DYNAMISCHE AUFTEILUNG VON RESSOURCEN ZWISCHEN KOMMUNIKATION UND ERFASSUNG FÜR INTELLIGENTE VERKEHRSSYSTEME**

(57)  Ein Aspekt der vorliegenden Offenbarung betrifft ein Verfahren zum Aufteilen von verfügbaren Ressourcen in Bezug auf die Kommunikations- und Erfassungsfunktionen von Objekten, wobei jedes Objekt von zwei oder mehr Objekten ein Fahrzeug, eine Straßeninfrastruktur, oder eine andere Vorrichtung ist, das dazu ausgelegt ist, ihre jeweilige Umgebung zu erfassen. Das Verfahren umfasst Empfangen von Informationen, die sich auf Performanz-Erfassungseigenschaften der zwei oder mehr Objekte beziehen, von den zwei oder mehr Objekten, wobei jedes der zwei oder mehr Objekte eine oder mehrere Performanz-Erfassungseigenschaften aufweist und dazu ausgelegt ist, Informationen über seine eine oder mehrere Performanz-Erfassungseigenschaften bereitzustellen. Darüber hinaus umfasst das Verfahren das Berechnen eines Anpassungsparameters für mindestens ein Objekt aus den zwei oder mehr Objekten basierend auf den in Bezug auf die Performanz-Erfassungseigenschaften der zwei oder mehr Objekte empfangenen Informationen. Dabei soll der Anpassungsparameter verwendet werden, um eine verfügbare Ressource für das mindestens eine Objekt zwischen einer Kommunikationsfunktion und einer Erfassungsfunktion dieses Objektes aufzuteilen. Schließlich umfasst das Verfahren das Senden des berechneten Anpassungsparameters an das mindestens eine Objekt, um eine verfügbare Ressource für das mindestens eine Objekt zwischen einer Kommunikationsfunktion und einer Erfassungsfunktion dieses Objektes basierend auf dem gesendeten Anpassungsparameter aufzuteilen.

**Fig. 2**

EP 4 535 761 A1

**Beschreibung**

**Technisches Gebiet**

Die vorliegende Erfindung betrifft Techniken zum Aufteilen von verfügbaren Ressourcen in Bezug auf die Kommunikations- und Erfassungsfunktionen von Objekten. Zugehörige Aspekte betreffen ein Computer-Programm, ein Modul, und zwei oder mehr Objekte.

**Hintergrund**

In letzter Zeit werden Fahrzeuge und/oder Straßeninfrastrukturen (bspw. "intelligente Verkehrssysteme" wie intelligente Fahrzeuge, intelligente Straßeninfrastrukturen, usw.) in immer stärkerem Maß im Straßenverkehr eingesetzt, deren Kooperation einen wesentlichen Beitrag dazu leisten kann, den Straßenverkehr effizienter, sicherer und umweltfreundlicher zu machen, insbesondere durch die Bereitstellung umfassender, aktueller und leicht zugänglicher Informationen für die Straßenverkehrsteilnehmer (in manchen Fällen auch für andere Straßenverkehrsteilnehmer, die keine intelligente Verkehrssysteme sind) und die gezielte und dynamische Steuerung und Lenkung des Verkehrs.

Einige Methoden des Standes der Technik sind jedoch nicht in der Lage, die verfügbaren Ressourcen der intelligenten Systeme (z.B. verfügbare Zeit und/oder Leistung) dynamisch und adaptiv zu verteilen, um eine optimale kooperative Performanz dieser intelligenten Systeme zu erreichen und/oder ihren Energieverbrauch zu optimieren, was zur Realisierung der oben genannten Ziele erforderlich sein kann. Darüber hinaus sind manche Methoden des Standes der Technik nicht in der Lage, die Performanz-Erfassungseigenschaften der intelligenten Verkehrssysteme in ihrer Gesamtheit zu nutzen, um diese verfügbaren Ressourcen aufzuteilen.

Daher besteht ein Bedarf an der Entwicklung neuer Techniken zum Aufteilen von verfügbaren Ressourcen der Fahrzeuge, der Straßeninfrastrukturen oder anderer Vorrichtungen, die einige oder alle der oben genannten Probleme lösen können.

**Zusammenfassung der Erfindung**

Ein erster allgemeiner Aspekt der vorliegenden Offenbarung betrifft ein Verfahren zum Aufteilen von verfügbaren Ressourcen in Bezug auf die Kommunikations- und Erfassungsfunktionen von Objekten, wobei jedes Objekt von zwei oder mehr Objekten ein Fahrzeug, eine Straßeninfrastruktur, oder eine andere Vorrichtung ist, das dazu ausgelegt ist, ihre jeweilige Umgebung zu erfassen. Das Verfahren umfasst das Empfangen von Informationen, die sich auf Performanz-Erfassungseigenschaften der zwei oder mehr Objekte beziehen, von den zwei oder mehr Objekten, wobei jedes der zwei oder mehr Objekte eine oder mehrere Performanz-Erfassungseigenschaften aufweist und dazu ausgelegt ist, Informationen über seine eine oder mehrere Performanz-Erfassungseigenschaften bereitzustellen. Darüber hinaus umfasst das Verfahren das Berechnen eines Anpassungsparameters für mindestens ein Objekt aus den zwei oder mehr Objekten basierend auf den in Bezug auf die Performanz-Erfassungseigenschaften der zwei oder mehr Objekte empfangenen Informationen. Dabei soll der Anpassungsparameter verwendet werden, um eine verfügbare Ressource für das mindestens eine Objekt zwischen einer Kommunikationsfunktion und einer Erfassungsfunktion dieses Objektes aufzuteilen. Schließlich umfasst das Verfahren das Senden des berechneten Anpassungsparameters an das mindestens eine Objekt, um eine verfügbare Ressource für das mindestens eine Objekt zwischen einer Kommunikationsfunktion und einer Erfassungsfunktion dieses Objektes basierend auf dem gesendeten Anpassungsparameter aufzuteilen.

Ein zweiter allgemeiner Aspekt der vorliegenden Offenbarung betrifft ein Computer-Programm, das dazu ausgelegt ist, um das Verfahren gemäß dem ersten allgemeinen Aspekt der vorliegenden Offenbarung auszuführen. Die vorliegende Offenbarung betrifft auch ein computer-lesbares Medium (z.B. ein maschinenlesbares Speichermedium wie beispielsweise ein optisches Speichermedium oder Festspeicher, z.B. FLASH-Speicher) und Signale, die das Computer-Programm der vorliegenden Offenbarung speichern oder codieren.

Ein dritter allgemeiner Aspekt der vorliegenden Offenbarung betrifft ein Modul, das dazu ausgelegt ist, um das Verfahren zum Aufteilen von verfügbaren Ressourcen in Bezug auf die Kommunikations- und Erfassungsfunktionen von Objekten gemäß dem ersten allgemeinen Aspekt auszuführen und/oder das Computer-Programm gemäß dem zweiten allgemeinen Aspekt auszuführen.

Ein vierter allgemeiner Aspekt der vorliegenden Offenbarung betrifft zwei oder mehr Objekte, wobei jedes Objekt von zwei oder mehr Objekten ein Fahrzeug, eine Straßeninfrastruktur, oder eine andere Vorrichtung ist. Die zwei oder mehr Objekte des vierten Aspekts sind dazu ausgelegt, um ihre jeweilige Umgebung zu erfassen und Informationen an ein Modul gemäß dem dritten Aspekt zu senden. Darüber hinaus ist mindestens ein Objekt der zwei oder mehr Objekte dazu ausgelegt, um einen berechneten Anpassungsparameter für das mindestens eine Objekt aus den zwei oder mehr Objekten von dem Modul zu empfangen. Zudem ist das mindestens eine Objekt dazu ausgelegt, um eine verfügbare Ressource für das mindestens eine Objekt zwischen einer Kommunikationsfunktion und einer Erfassungsfunktion dieses Objektes basierend auf dem berechneten Anpassungsparameter aufzuteilen.

Die Techniken der ersten bis vierten allgemeinen Aspekte können einen oder mehrere der folgenden Vorteile haben.

Erstens bieten die Techniken der vorliegenden Offenbarung im Vergleich zu einigen Techniken des Standes der Technik die Möglichkeit, die verfügbaren Ressourcen von Objekten, z.B. intelligenten Verkehrssystemen wie intelligenten Fahrzeugen, intelligenten Straßeninfrastrukturen oder anderen Vorrichtungen, optimal zwischen Kommunikations- und Erfassungsfunktionen dieser intelligenten Verkehrssysteme auf der Grundlage ihrer Performanz-Erfassungseigenschaften aufzuteilen.

Zweitens können die vorliegenden Techniken es ermöglichen, Informationen über Performanz-Erfassungseigenschaften der intelligenten Verkehrssysteme (die bspw. in Echtzeit ändern können) zu sammeln und basierend auf diesen Informationen die Aufteilung der verfügbaren Ressourcen zwischen Kommunikations- und Erfassungsfunktionen für diesen intelligenten Verkehrssysteme dynamisch anzupassen. Insbesondere kann ein intelligentes Verkehrssystem weniger verfügbaren Ressourcen für die Kommunikation mit anderen Straßenverkehrsteilnehmern (z.B. anderen intelligenten Verkehrssystemen) und mehr verfügbare Ressourcen für die Erfassung (bspw. zur Verbesserung seiner Performanz-Erfassungseigenschaften) verwenden, wenn sich zu einem bestimmten Zeitpunkt seine Performanz-Erfassungseigenschaft verschlechtert haben (z.B. im Vergleich zu den Performanz-Erfassungseigenschaften der anderen intelligenten Verkehrssystem zu demselben Zeitpunkt). Anderseits kann ein intelligentes Verkehrssystem weniger verfügbare Ressourcen für die Erfassung und mehr verfügbare Ressourcen für die Kommunikation mit anderen Straßenverkehrsteilnehmern ausgeben (bspw. um ihnen erfasste verkehrsbezogene Informationen zu übermitteln), wenn sich zu einem bestimmten Zeitpunkt seine Performanz-Erfassungseigenschaft verbessert haben (z.B. im Vergleich zu den Performanz-Erfassungseigenschaften der anderen intelligenten Verkehrssystem zu demselben Zeitpunkt).

Einige Begriffe werden in der vorliegenden Offenbarung in folgender Weise verwendet:
Im Sinne der vorliegenden Offenbarung kann der Begriff "intelligente Verkehrssysteme" oder anders ausgedrückt "Verkehrstelematik" (engl. "Intelligent Transport Systems") Systeme bezeichnen, bei denen Informations- und Kommunikationstechnologien im Straßenverkehr, einschließlich seiner Straßeninfrastrukturen, Fahrzeuge und Nutzer, sowie beim Verkehrs- und Mobilitätsmanagement und für Schnittstellen zu anderen Verkehrsträgern eingesetzt werden (sh. Artikel 4 der RICHTLINIE 2010/40/EU DES EUROPÄISCHEN PARLAMENTS UND DES RATES vom 7. Juli 2010 zum Rahmen für die Einführung intelligenter Verkehrssysteme im Straßenverkehr und für deren Schnittstellen zu anderen Verkehrsträgern).

Demensprechend kann der Begriff "Objekt" ein "Fahrzeug", eine "Straßeninfrastruktur", oder eine andere "Vorrichtung" (bspw. ein Handy eines Nutzers) umfassen, das mit einem oder mehreren Sensoren ausgestattet sein kann (zum Zweck der Erfassung seiner Umgebung). Darüber hinaus können die "Objekte" der vorliegenden Techniken mit objektexternen Systemen kommunizieren, z.B. mit einem nachstehend definierten "Modul" oder anderen Systemen (bspw. Cloud-Systemen). In manchen Fällen können die "Objekte" im Sinne der vorliegenden Offenbarung auch miteinander kommunizieren, mehr dazu weiter unten. Zudem können "Objekte" intelligente Verkehrssysteme gemäß der obigen Definition sein oder mit solchen Systemen ausgestattet sein. Im Folgenden werden solche "Objekte" in manchen Fällen als "intelligente Fahrzeuge", "intelligente Straßeninfrastrukturen" oder "intelligente Vorrichtungen" bezeichnet. Es wird auch eine Abkürzung wie "Fahrzeuge", "Straßeninfrastrukturen" und "Vorrichtungen" manchmal verwendet.

In der vorliegenden Offenbarung kann ein solches Fahrzeug (z.B. ein intelligentes "Fahrzeug") mit einem oder mehreren Sensoren wie Kameras, Radar-, Lidar-, Ultraschall-, GPS oder Wärmesensoren ausgestattet sein, um seine Umgebung zu erfassen (bspw. in Echtzeit während der Fahrt). Als eine nicht erschöpfende Liste von weiteren Einheiten des Sensors können CPU-Kerne, System-on-a-Chip (SoC)-Hardware, Arbeitsspeicher, Festplatten, Verarbeitungsmodule (bspw. Bildverarbeitungsmodule), Kommunikationsschnittstellen zu anderen Vorrichtungen genannt werden. Ein Fahrzeug kann mit fahrzeugexternen Systemen wie einem "Modul" kommunizieren, bspw. Informationen an das Modul senden und/oder von ihm empfangen, mehr dazu weiter unten (eine Kommunikation mit anderen fahrzeugexternen Systemen wie Cloud-Systemen ist auch denkbar). Darüber hinaus kann ein "intelligentes Fahrzeug" Informationen, bspw. in Form von aufgenommen Sensordaten (bspw. in Form von Bilddaten oder Datenreihen), mit anderen "intelligenten Fahrzeugen", "intelligenten Straßeninfrastrukturen", "intelligenten Vorrichtungen", oder eine beliebige Kombination davon austauschen. In manchen Fällen können die oben definierten "Objekte" mit anderen Straßenverkehrsteilnehmern, die kein intelligenten Verkehrssysteme im Sinne der vorliegenden Offenbarung sind, kommunizieren (z.B. Nachrichten an sie senden und/oder Nachrichten von denen empfangen). In manchen Beispielen kann ein Sensor des Fahrzeuges im Rahmen des teilautonomen, autonomen oder assistierten Fahrens eines Fahrzeuges eingesetzt werden, um eine Funktionalität für das Fahrzeug bereitzustellen (bspw. in Bezug auf Sicherheitsfunktionen, die Realisierung von Fahrerinformationen und Komfortfunktionen, wie intelligente Scheinwerfersteuerung und der Verkehrszeicheninformation).

Ein "Sensor" eines "Fahrzeuges" kann eine Kamera z.B. Front- und/oder Rückkamera eines Fahrzeuges sein. Darüber hinaus kann ein Sensor und ein System-on-Chip (SoC) umfassen, das bspw. einen Mikroprozessor für Bildverarbeitungsalgorithmen enthält. Ein Kamera-basierter Sensor kann eine oder mehrere technische Pfade zur Bildverarbeitung benutzen. Der erste Pfad eines solchen Sensors kann das typische Aussehen von Straßenobjektklassen wie Fahrzeugen, Fahrradfahrern oder Fahrbahnmarkierungen über programmierte Algorithmen erkennen lassen. Beim zweiten Pfad kann der Kamera-basierte Sensor den optischen Fluss und die sogenannte Structure from Motion (SfM) nutzen, um erhabene, fahrbahnbegrenzende Straßenobjekte wie Bordsteine, Schrammborden oder Leitplanken zu erkennen. Zusammengehörige Bildpunkte können in ihrer Bewegung nachverfolgt werden. Daraus kann aus dem zweidimensionalen Kamerabild eine dreidimensionale Struktur abgeschätzt werden. Der dritte Pfad kann sich auf künstliche Intelligenz stützen (bspw. basierend auf einem computerbasierten Maschinenlernsystem), indem Straßenobjekte wie am Straßenrand geparkte Fahrzeuge klassifiziert und Fahrbahnoberflächen vom Fahrbahnrand voneinander unterschieden werden. Im Rahmen der vorliegenden Offenbarung ist es auch denkbar, dass ein Mobilnetzwerk selbst in manchen Fällen die Rolle eines Sensors spielen kann und daher hier als "Sensor" bezeichnet wird. Zum Beispiel kann das 6G-Netzwerk derartige Erfassungsfunktionalitäten umfassen, indem Informationen über die Umgebung eines "Objektes" in geeigneter Weise von dem 6G-Netzwerk an das "Objekt" übertragen werden können (bspw. in Form von Kommunikationssignalen, die dann auf der Objektseite dekodiert werden). Diese Technologie ist als "integrierte Kommunikation und Sensierung" (engl. "Integrated Communication and Sensing") bekannt.

Unter "Straßeninfrastrukturen" (bspw. "intelligenten Straßeninfrastrukturen") wird in der vorliegenden Offenbarung jegliche Infrastruktur im oben definierten Sinne verstanden, die mit einem oder mehreren Sensoren ausgestattet ist, welche eine Umgebung der entsprechenden Straßeninfrastruktur erfassen können. Bei diesen Sensoren kann es sich bspw. um Infrastruktursensoren handeln, die unzerstörbare Geräte (z.B. straßeneigene Reflektoren) sein können, die je nach Bedarf in der Straße oder in der Umgebung der Straße (z.B. an Gebäuden, Pfosten und Schildern) installiert oder eingebettet werden. Diese Sensoren können z.B. (zumindest teilweise) dieselben technischen Eigenschaften aufweisen wie die oben beschriebenen Fahrzeugsensoren. Ähnlich wie ein "Fahrzeug" kann eine "Straßeninfrastruktur" mit straßeninfrastrukturexternen Systemen wie dem unten definierten "Modul" kommunizieren (eine Kommunikation mit anderen straßeninfrastrukturexternen Systemen wie Cloud-Systemen ist ebenfalls denkbar). Wie oben bereits erwähnt, kann eine "intelligente Straßeninfrastruktur" in manchen Fällen mit "intelligenten Fahrzeugen" und/oder "intelligenten Vorrichtungen" kommunizieren. Die Fahrzeug-zu-Infrastruktur-Kommunikation kann in beide Richtungen erfolgen, d.h. die Straßeninfrastrukturen können Informationen (bspw. CAM- und/oder CPM-Nachrichten) an das "intelligente Fahrzeug" übermitteln und umgekehrt kann das Fahrzeug die Informationen an die "intelligente Straßeninfrastruktur" senden. (Eine ähnliche Kommunikation zwischen einer "intelligenten Straßeninfrastruktur" und einer "intelligenten Vorrichtung" kann ebenfalls möglich sein.)

In der vorliegenden Offenlegung kann der Begriff "Vorrichtung" so verstanden werden, dass er eine Vorrichtung (bspw. "eine intelligente Vorrichtung") bezeichnet, die kein "Fahrzeug" oder "Straßeninfrastruktur" im Sinne der obigen Definition ist, die aber im Zusammenhang mit dem Verkehr relevant sein kann und mit einem oder mehreren Sensoren ausgestattet ist, welche eine Umgebung dieser Vorrichtung erfassen können. Darüber hinaus kann die "Vorrichtung" mit Systemen außerhalb der Vorrichtung kommunizieren, wie z.B. dem unten definierten "Modul" (eine Kommunikation mit anderen vorrichtungsexternen Systemen wie Cloud-Systemen ist ebenfalls denkbar). In manchen Fällen kann eine "intelligente Vorrichtung" mit anderen "intelligenten Vorrichtungen", "intelligenten Fahrzeugen", "intelligenten Straßeninfrastrukturen" oder eine beliebige Kombination davon kommunizieren. Bei der "Vorrichtung" kann es sich bspw. um ein Handy (oder ein anderes Gerät) eines Nutzers handeln, das die oben definierten Eigenschaften einer "Vorrichtung" aufweist. Zum Beispiel kann eine "Vorrichtung" ein Handy eines Fußgängers, eines Fahrzeuginsassen (eines fahrenden oder stehenden Fahrzeugs) usw. sein, die am Straßenverkehr teilnehmen.

Der Begriff "Performanz-Erfassungseigenschaften" im Sinne der vorliegenden Offenbarung kann sich auf Performanz-Erfassungseigenschaften von "Objekten" beziehen. Eine Performanz-Erfassungseigenschaft eines "Objektes" (bspw. eines "intelligenten Fahrzeugs", einer "intelligenten Straßeninfrastruktur", oder einer "intelligenten Vorrichtung") kann durch eine Performanz-Erfassungseigenschaft eines Sensors des Objektes gegeben werden. Eine nicht erschöpfende Liste solcher Performanz-Erfassungseigenschaften eines Sensors umfasst eine Auflösung, eine Genauigkeit, eine erforderliche Erfassungs- oder Verarbeitungszeit (bspw. die Bilderverarbeitungszeit), eine erforderliche Kommunikationszeit zwischen einem Sensor und einer Sensordatenverarbeitungseinheit (bspw. einem Fahrzeugcomputer, wenn ein Sensor in einem Fahrzeug eingesetzt ist), oder andere sensorbezogene Eigenschaften. Dabei kann eine Performanz-Erfassungseigenschaft quantifiziert und bspw. durch einen entsprechenden numerischen "Erfassungsparameter" charakterisiert werden. Auf diese Weise kann eine Anzahl von Erfassungseigenschaften eines "Objektes" beschrieben werden. In manchen Fällen, wenn das Objekt mehr als einen Sensor umfasst, kann eine Performanz-Erfassungseigenschaft eines Objektes durch einen globalen Parameter (bspw. einen globalen "Erfassungsparameter") charakterisiert werden, die sich auf diese Performanz-Erfassungseigenschaft bezieht (bspw. ein Durchschnittwert aller Performanz-Erfassungseigenschaften desselben Typs, die verschiedene Sensoren charakterisieren).

Die hier verwendeten Begriffe "CAM-Nachrichten" (engl. "Cooperative Awareness Messages" oder kurz CAM-Messages) und "CPM-Nachrichten" (engl.

"Collective Perception Message" oder kurz CPM-Messages) können sich auf standardisierte Datenpakete beziehen, die bei der Fahrzeugkommunikation innerhalb intelligenter Verkehrssysteme verwendet werden. Eine "CAM-Nachricht" eines intelligenten Verkehrssystems kann eine oder mehrere der folgenden Informationen in Bezug auf dieses und/oder andere intelligente Verkehrssysteme enthalten: Fahrzeugposition, Fahrgeschwindigkeit, Fahrtrichtung, Fahrzeugzustand, Verkehrsfluss (bspw. Hinweise über Ampelphasen), oder andere Informationen. Eine CPM-Nachricht kann Informationen über die Sensoren des intelligenten Verkehrssystems, wie z.B. Sichtfelder (engl. "field-of-views"), und die von diesen Sensoren (z.B. Sensoren eines "intelligenten Fahrzeugs") erkannten Verkehrsobjekte in der Umgebung des intelligenten Verkehrssystems enthalten. In einem Beispiel können die CPM-Nachrichten aggregierte und verarbeitete Informationen enthalten, die aus mehreren CAM-Nachrichten gesammelt wurden.

Im Rahmen der vorliegenden Offenbarung ist auch denkbar, dass ein Informationenaustausch zwischen "intelligenten Fahrzeugen", "intelligenten Straßeninfrastrukturen", und "intelligenten Vorrichtungen" (jede beliebige Kombination der beteiligten intelligenten Verkehrssysteme ist denkbar) über "CAM- bzw. CPM-Nachrichten erfolgen kann. Die CAM- bzw. CPM-Nachrichten können von einem "Objekt" (bspw. einem "intelligentem Fahrzeug" oder einer "intelligenten Straßeninfrastruktur") übertragen (mit anderen Worten: ausgestrahlt) werden. Die CAM- bzw. CPM-Nachrichten können einmal pro einen vorgegebenen Zeitintervall (bspw. einmal 100 Millisekunden oder mehr, einmal pro Sekunde oder mehr) von dem intelligenten Verkehrssystem ausgesendet werden. In manchen Fällen dürfen die intelligenten Verkehrssysteme einen bestimmen Abstand zueinander nicht überschreiten, um die Kommunikation (bspw. durch CAM- und/ oder CPM-Nachrichten) untereinander aufrechtzuerhalten.

Im Rahmen der vorliegenden Offenbarung ist es auch denkbar, dass Informationen über die oben eingeführten Performanz-Erfassungseigenschaften eines Sensors eines "Objektes" in der CAM- und/oder CPM-Nachricht vorhanden sein können, oder die CAM- und/oder CPM-Nachricht Informationen enthält, aus denen solche Performanz-Erfassungseigenschaften bestimmt werden können. In manchen Fällen können "Objekte" (bspw. "intelligente Fahrzeuge", "intelligente Straßeninfrastrukturen", "intelligente Vorrichtungen" oder eine beliebige Kombination davon) die CAM- und/oder CPM-Nachrichten an das "Modul" senden (siehe unten).

In manchen Fällen können die CAM-Nachrichten und/oder CPM-Nachrichten zwischen Fahrzeugen mittels Fahrzeug-zu-Fahrzeug-Kommunikation ausgetauscht werden (im Englischen ist die Bezeichnung Vehicle-to-Vehicle-Communication oder kurz V2V gebräuchlich). Zum Beispiel kann die Fahrzeug-zu-Fahrzeug-Kommunikation die Funktechnik von WLANs nach 802.11p nutzen. Alternativ können die CAM- und/oder CPM-Nachrichten von einem Fahrzeug mittels Fahrzeug-zu-Infrastruktur-Kommunikation (engl. Vehicle-to-Infrastructure Communication oder kurz V2I) an eine Straßeninfrastruktur gesendet werden. In manchen Fällen können die CAM- und/oder CPM-Nachrichten über Roadside Units (RSU) mittels Fahrzeug-zu-Infrastruktur-Kommunikation und der Verkehrsleitzentrale ausgetauscht werden. Die Struktur der Fahrzeug-zu-Infrastruktur-Kommunikation kann drahtlos sein und kann bspw. auf der Basis von WLANs nach 802.11a, 802.11b oder 802.11g aufbauen. In manchen Fällen kann die Fahrzeug-zu-Infrastruktur-Kommunikation auf Bluetooth oder im Falle von Sensornetzwerken auf ZigBee oder auch auf Dedicated Short Range Communication (DSRC) basieren. In den anderen Fällen können die CAM- bzw. CPM-Nachrichten über eine entsprechende Mobilfunkverbindung unter Verwendung einer entsprechenden Basisstation übertragen werden, die bspw. als 5G- oder 6G-Verbindung ausgebildet sein kann (bspw. von einem intelligenten Verkehrssystem an das "Modul" oder von einem intelligenten Verkehrssystem an ein anderes "intelligentes Verkehrssystem" übertragen werden). In manchen Fällen, in denen keine Basisstation vorhanden ist, kann die Fahrzeug-zu-Fahrzeug-Kommunikation und/oder Fahrzeug-zu-Infrastruktur-Kommunikation über eine direkte drahtlose Kommunikationsverbindung zwischen den Objekten (z.B. "intelligenten Fahrzeugen" und/oder "intelligenten Straßeninfrastrukturen") hergestellt werden (eine solche Kommunikationsverbindung wird im Folgenden als "Sidelink-Kommunikation" bezeichnet). Die Kommunikation zwischen den oben definierten "intelligenten Vorrichtungen" sowie zwischen den "intelligenten Vorrichtungen" und den "intelligenten Fahrzeugen"/ "intelligenten Straßeninfrastrukturen" kann in ähnlicher Weise erfolgen, wie oben im Zusammenhang mit der Fahrzeug-zu-Fahrzeug-Kommunikation und Fahrzeug-zu-Infrastruktur-Kommunikation beschrieben.

Der Begriff "Ressource" kann jegliche Ressource bezeichnen, die allein oder zusammen mit anderen Ressourcen die Ausführbarkeit einer Kommunikationsfunktion und/oder einer Erfassungsfunktion eines "Objektes" gewährleistet. Eine "Ressource" kann bspw. ein vorgegebenes Zeitintervall sein, das zwischen der Kommunikationsfunktion und der Erfassungsfunktion des Objektes aufgeteilt wird (bspw. dynamisch in Echtzeit, wenn das Objekt in Betrieb ist). In einem anderen Beispiel kann eine "Ressource" eine vorgegebene Leistung sein, die sowohl für die Kommunikationsfunktion als auch für die Erfassungsfunktion des Objektes zu verteilen ist. Wie weiter unten genauer erläutert, kann eine "Ressource" des Objektes mittels eines "Anpassungsparameters" zwischen der Kommunikationsfunktion und der Erfassungsfunktion des Objektes aufgeteilt (oder anders ausgedrückt: verteilt) werden.

Ein "Modul" im Sinne der vorliegenden Offenbarung kann dem Zweck der Berechnung der oben eingeführten "Anpassungsparameter" dienen. Zudem kann das Modul die Anpassungsparameter an jeweilige "Objekte" übertragen (oder mit anderen Worten: senden), mehr dazu weiter unten.

Der Begriff "Fahrzeug" umfasst jede zum Transport von Passagieren und/oder Frachtgut ausgelegte Vorrichtung. Das Fahrzeug kann ein Kraftfahrzeug sein (zum Beispiel ein zumindest teilweise autonom operierendes / assistiertes Kraftfahrzeug, insbesondere ein PKW oder ein LKW). Allerdings kann das Fahrzeug auch ein Schiff, ein Zug, ein Luftfahrzeug oder ein Raumfahrzeug sein.

**Kurzbeschreibung der Figuren**

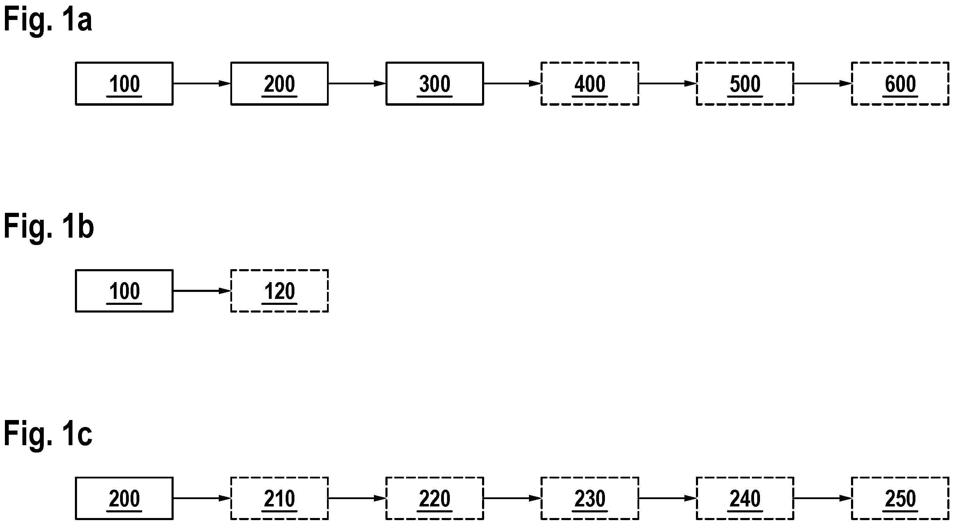

**Fig. 1a** ist ein Flussdiagramm, das ein Beispiel eines Verfahrens zum Aufteilen von verfügbaren Ressourcen in Bezug auf die Kommunikations- und Erfassungsfunktionen von Objekten gemäß dem ersten Aspekt darstellt. **Fig. 1b** und **1c** sind Flussdiagramme, die weitere mögliche Verfahrensschritte gemäß dem ersten Aspekt zeigen.

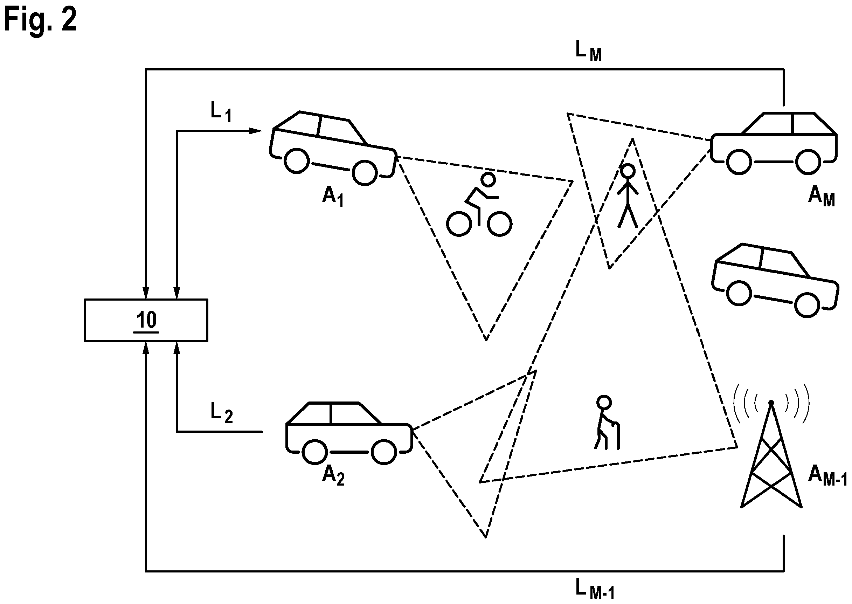

**Fig. 2** zeigt schematisch eine beispielhafte Straßenszene mit $M$ intelligenten Verkehrssystemen, in der vier dieser intelligenten Verkehrssystemen skizziert sind: drei Fahrzeuge $A_1$, $A_2$ und $A_M$ und eine Straßeninfrastruktur $A_{M-1}$, die ihre jeweilige Umgebung erfassen und Nachrichten $L_1$, $L_2$, $L_{M-1}$, und $L_M$ an ein Modul 10 senden. In diesem Beispiel kommuniziert das Modul 10 mit dem Fahrzeug $A_1$. Die anderen Straßenverkehrsteilnehmer, bei denen es sich nicht um intelligente Verkehrssysteme handelt, sind ebenfalls auf dieser Figur dargestellt.

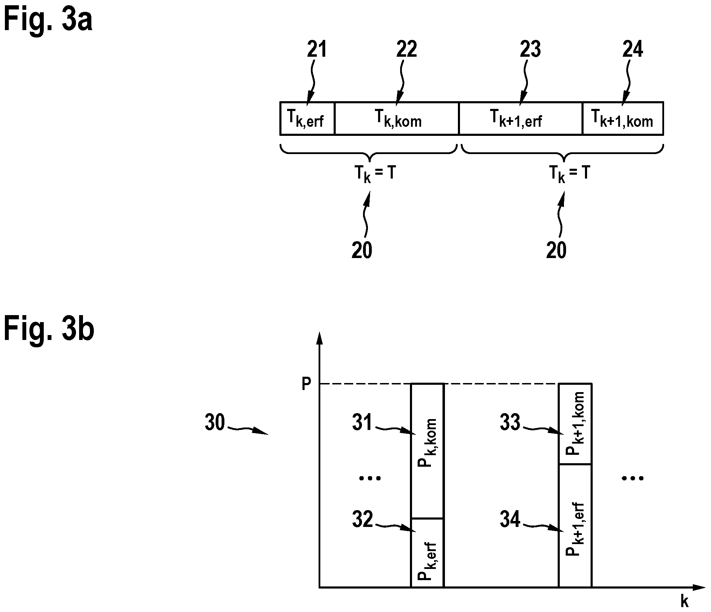

**Fig. 3a** und **3b** zeigen schematisch mögliche beispielhafte Ressourcenaufteilungen (Zeitintervall $T$ in **Fig. 3a** und die Leistung $P$ in **Fig. 3b)** zwischen einer Kommunikationsfunktion und einer Erfassungsfunktion für zwei aufeinanderfolgende Zyklen $k$ und $k+1$ eines der in **Fig. 2** dargestellten $M$ intelligenten Verkehrssysteme.

**Ausführliche Beschreibung**

Zunächst werden anhand von **Fig. 1a** bis **1c** Techniken zum Aufteilen von verfügbaren Ressourcen in Bezug auf die Kommunikations- und Erfassungsfunktionen von Objekten beschrieben. Sodann wird eine beispielhafte Straßenszene mit $M$ intelligenten Verkehrssystemen, die in **Fig. 2** dargestellt ist, und beispielhafte Ressourcenaufteilungen, die in **Fig. 3** gezeigt sind, in Bezug auf das Verfahren der vorliegenden Offenbarung besprochen.

Wie in den **Fig. 1a** bis **1c** skizziert, betrifft ein erster allgemeiner Aspekt ein Verfahren (bspw. ein computer-implementiertes Verfahren) zum Aufteilen von verfügbaren Ressourcen in Bezug auf die Kommunikations- und Erfassungsfunktionen von Objekten. Die Verfahrensschritte des entsprechenden unabhängigen Anspruchs sind in den durch durchgezogene Linien gezeichneten Kästen in **Fig. 1a** bis **1c** dargestellt, während die Verfahrensschritte einiger abhängiger Ansprüche in den durch gestrichelte Linien dargestellten Kästen gezeigt sind.

In den Techniken der vorliegenden Offenbarung ist jedes Objekt von zwei oder mehr Objekten ein Fahrzeug, eine Straßeninfrastruktur, oder eine andere Vorrichtung (bspw. ein Handy eines Nutzers wie eines Fußgängers, Fahrzeuginsassen usw.), das dazu ausgelegt ist, ihre jeweilige Umgebung zu erfassen. Die zwei oder mehr Objekte können intelligente Verkehrssysteme sein oder mit solchen Systemen ausgestattet sein. Mit anderen Worten, die "Objekte" können eine beliebige Kombination aus "intelligenten Fahrzeugen", "intelligenten Straßeninfrastrukturen" und "intelligenten Vorrichtungen" sein, wie oben bereits definiert. Zum Beispiel können zwei oder mehr Objekte insgesamt $M$ Objekte umfassen (z.B. kann $M$ gleich vier oder mehr, zehn oder mehr, zwanzig oder mehr sein), wie in **Fig. 2** beispielhaft dargestellt. In dieser Figur sind drei "intelligente Fahrzeuge" $A_1$, $A_2$ und $A_M$ und eine "intelligente Straßeninfrastruktur" $A_{M-1}$ gezeigt. Die Umgebung, die durch das jeweilige "Objekt" erfasst werden kann, kann eine nicht erschöpfende Liste beliebiger Kombinationen von anderen "intelligenten Fahrzeugen", "intelligenten Straßeninfrastrukturen", "intelligenten Vorrichtungen", sowie anderen Straßenobjekten und Straßenverkehrsteilnehmern, die keine intelligenten Verkehrssysteme im Sinne der vorliegenden Offenbarung sind, wie bspw. Fahrzeuge, Fußgänger, und Radfahrer umfassen (wie in **Fig. 2** veranschaulicht).

Der erste Schritt des Verfahrens umfasst Empfangen 100 von Informationen, die sich auf Performanz-Erfassungseigenschaften der zwei oder mehr Objekte beziehen, von den zwei oder mehr Objekten. Darüber hinaus weist jedes der zwei oder mehr Objekte eine oder mehrere Performanz-Erfassungseigenschaften auf (bspw. zwei oder mehr, drei oder mehr, fünf oder mehr, oder zehn oder mehr Performanz-Erfassungseigenschaften) und ist dazu ausgelegt, Informationen über seine eine oder mehrere Performanz-Erfassungseigenschaften bereitzustellen (bspw. diese Informationen senden). Wie oben bereits beschrieben, kann eine Performanz-Erfassungseigenschaft eines "Objektes" auf der Grundlage einer Performanz-Erfassungseigenschaft eines oder mehrerer Sensoren des Objektes angegeben werden. Diese Informationen, können z.B. durch ein Modul 10 empfangen werden (siehe obige Definitionen und auch die nachfolgenden Diskussionen).

Dazu kann der Verfahrensschritt "Empfangen von Informationen", die sich auf die Performanz-Erfassungseigenschaften der zwei oder mehr Objekte beziehen, das Empfangen 120 von Erfassungsparametern für jedes Objekt der zwei oder mehr Objekte umfassen (bspw. für die "Objekte" $A_1$, $A_2$,..., $A_{M-1}$ und $A_M$, die in der **Fig. 2** gezeigt sind). Dabei kann ein Erfassungsparameter jeder Performanz-Erfassungseigenschaft der einen oder mehreren Performanz-Erfassungseigenschaften des Objektes zugewiesen sein, wodurch ein Satz von Erfassungsparametern für jedes Objekt der zwei oder mehr Objekte gebildet wird.

Im Folgenden wird in manchen Fällen ein Erfassungsparameter eines Objektes als $r_j^m$ bezeichnet, wobei der Index $j$ einen Erfassungsparameter eines $m$-ten Objektes nummeriert. (Mit anderen Worten kann $r_j^m$ einen numerischen Wert des $j$-en Erfassungsparameters des $m$-ten Objektes darstellen.) Dabei kann der Index m von 1 bis $M$ laufen, wenn "zwei oder mehr Objekte" insgesamt $M$ Objekte umfassen. D.h. $m \in [1,..,M]$. Das m-te Objekt kann z.B. durch insgesamt $R$ Erfassungsparameter charakterisiert sein, so dass der Index $j$ von 1 bis $R$ läuft. D.h. $j \in [1,..,R]$. In einem Beispiel kann ein Satz von Erfassungsparametern für das $m$-te Objekt als $\{r_j^m\}_{j=1}^R$ bezeichnet werden. In manchen Fällen kann eine Anzahl von Erfassungsparametern $R$ in jedem Satz von Erfassungsparametern dieselbe sein. Anders ausgedrückt: Für jedes Objekt der zwei oder mehr Objekte kann dieselbe Anzahl von Erfassungsparametern für das Verfahren ausgewählt werden, die die entsprechende Performanz-Erfassungseigenschaften dieser Objekte quantifizieren. Die Erfassungsparameter können z.B. in einem vorgegebenen Intervall, $[a, b]$, liegen. (Dabei können $a$ und $b$ beliebige reelle Zahlen sein, $a, b \in \mathbb{R}$.) Zum Beispiel können die Erfassungsparameter in dem Intervall von null bis eins sein: [0,1].

In einem nicht einschränkenden Beispiel kann es bspw. durch geeignete Verarbeitung von Performanz-Erfassungseigenschaften und Normalisierung von Erfassungsparametern erreicht werden, dass je größer ein Erfassungsparameter ist, desto besser ist die mit diesem Erfassungsparameter verbundene Performanz-Erfassungseigenschaft. So kann beispielweise die Ungleichung $r_1^m > r_3^m$ bedeuten, dass die erste Performanz-Erfassungseigenschaft des $m$-ten Objektes besser ist als die dritte Performanz-Erfassungseigenschaft des $m$-ten Objektes. Die Ungleichung $r_2^m > r_2^n$ kann bspw. bedeuten, dass die zweite Performanz-Erfassungseigenschaft des $m$-ten Objektes ist besser als die zweite Performanz-Erfassungseigenschaft des $n$-ten Objektes.

In manchen Fällen kann ein Satz von Erfassungsparametern für das $m$-te Objekt als ein Vektor geschrieben werden. Z.B. kann der Vektor durch den folgenden Ausdruck geschrieben werden: $\Pi^m = (r_1^m, ..., r_R^m)^T$, wobei das Symbol $T$ der Transponierungs-Operation entspricht.

In den vorliegenden Techniken kann das Empfangen von Informationen, die sich auf die Performanz-Erfassungseigenschaften der zwei oder mehr Objekte beziehen, das Empfangen von Nachrichten umfassen, die von den zwei oder mehr Objekten gesendet werden. Diese Nachrichten können bspw. an ein Modul 10 gesendet und durch dieses Modul empfangen werden. Im Beispiel von **Fig. 2** drei "intelligente Fahrzeuge" $A_1$, $A_2$ und $A_M$ und eine "intelligente Straßeninfrastruktur" $A_{M-1}$ können entsprechende Nachrichten $L_1$, $L_2$, $L_{M-1}$, und $L_M$ an das Modul 10 senden. In manchen Fällen können Nachrichten die oben eingeführten CAM-Nachrichten und/oder CPM-Nachrichten sein.

Darüber hinaus umfasst das Verfahren das Berechnen 200 eines Anpassungsparameters für mindestens ein Objekt aus den zwei oder mehr Objekten (bspw. für alle der zwei oder mehr Objekten) basierend auf den in Bezug auf die Performanz-Erfassungseigenschaften der zwei oder mehr Objekte empfangenen Informationen (bspw. können diese Informationen CAM- und/oder CPM-Nachrichten umfassen, wie oben bereits beschrieben). Der Anpassungsparameter der vorliegenden Techniken soll verwendet werden, um eine verfügbare Ressource für das mindestens eine Objekt zwischen einer Kommunikationsfunktion und einer Erfassungsfunktion dieses Objektes aufzuteilen. In einem Fall kann die verfügbare Ressource für das Objekt ein vorgegebenes Zeitintervall 20 sein, das zwischen der Kommunikationsfunktion und der Erfassungsfunktion des Objektes aufgeteilt ist. In einem nicht einschränkenden Beispiel von **Fig. 3a** ist die verfügbare Ressource ein vorgegebenes Zeitintervall $T$; 20: Dabei ist ein Zeitintervall $T_{k,erf}$; 21 für die Erfassungsfunktion für einen Zyklus $k$ zugeordnet, während für denselben Zyklus $k$ ein Zeitintervall $T_{k,komm}$; 22 für die Kommunikationsfunktion zugeordnet ist. Die beispielhafte Aufteilung des vorgegebenen Zeitintervalls $T$; 20 zwischen der Kommunikationsfunktion und der Erfassungsfunktion für den nachfolgenden Zyklus $k + 1$ ist ebenfalls in **Fig. 3a** gezeigt (die Zyklen werden weiter unten besprochen). Alternativ oder zusätzlich kann die verfügbare Ressource für das Objekt eine vorgegebene Leistung 30 sein, die zwischen der Kommunikationsfunktion und der Erfassungsfunktion des Objektes aufgeteilt wird. In einem nicht einschränkenden Beispiel von **Fig. 3b** ist die verfügbare Ressource eine vorgegebene Leistung $P$; 30: Dabei ist eine Leistung $P_{k,erf}$; 31 für die Erfassungsfunktion für einen Zyklus $k$ zugeordnet, während für denselben Zyklus $k$ eine Leistung $P_{k,komm}$; 32 für die Kommunikationsfunktion zugeordnet ist. Die beispielhafte Aufteilung der vorgegebenen Leistung $P$; 30 zwischen der Kommunikationsfunktion und der Erfassungsfunktion für den nachfolgenden Zyklus $k + 1$ ist ebenfalls in **Fig. 3b** dargestellt.

In den Techniken der vorliegenden Offenbarung kann das Berechnen des Anpassungsparameters für das mindestens eine Objekt aus den zwei oder mehr Objekten das Zuweisen 210 eines Gewichtsfaktors für jeden Erfassungsparameter des Satzes von Erfassungsparametern umfassen. Im Folgenden wird in manchen Fällen ein Gewichtsfaktor eines Erfassungsparameters

$r_j^m$ als $f_j$ bezeichnet, wobei, wie bereits oben definiert, der Index $j$ ein Erfassungsparameter nummeriert. Zum Beispiel kann ein Gewichtsfaktor $f_j$ die Wichtigkeit einer Performanz-Erfassungseigenschaft widerspiegeln (die, wie bereits erläutert, durch einen entsprechenden Erfassungsparameter beschrieben werden kann). Deshalb kann in manchen Fällen ein Gewichtsfaktor $f_j$ unabhängig von dem Objekt sein. In einem Beispiel kann vorgegeben werden (bspw., durch einen Nutzer), ob eine Performanz-Erfassungseigenschaft im Vergleich zu einer anderen Performanz-Erfassungseigenschaft wichtiger oder weniger wichtig ist. Aufgrund dieser Informationen können den Gewichtsfaktoren entsprechende Werte zugeordnet werden. Die Gewichtsfaktoren können z.B. in einem vorgegebenen Intervall, [*c, d*], liegen. (Dabei können *c* und *d* beliebige reelle Zahlen sein, *c,*

$d \in \mathbb{R}$ .) Zum Beispiel können die Gewichtsfaktoren in dem Intervall von null bis eins sein: [0,1]. In manchen Fällen können die Gewichtsfaktoren normiert werden. Zum Beispiel können die Gewichtsfaktoren wie folgt normiert werden: $\sum_{j=1}^{R} f_j = 1$ , wobei $R$ eine gesamte Anzahl von Erfassungsparametern ist. In einem nicht einschränkenden Beispiel kann einem ersten Erfassungsparameter ein Gewichtsfaktor zugeordnet werden, der im Vergleich zu einem Gewichtsfaktor, der dem zweiten Erfassungsparameter zugeordnet ist, einen größeren Wert hat, wenn der erste Erfassungsparameter mit einer wichtigeren Performanz-Erfassungseigenschaft verknüpft ist als der zweite Erfassungsparameter. Anders ausgedrückt: je wichtiger eine Performanz-Erfassungseigenschaft ist, desto größer kann der Wert des mit dieser Performanz-Erfassungseigenschaft verbundenen Gewichtsfaktor $f_j$ sein. So kann beispielweise die Ungleichung $f_1 > f_2$ bedeuten, dass die erste Performanz-Erfassungseigenschaft wichtiger ist als die zweite Performanz-Erfassungseigenschaft.

Des Weiteren kann das Berechnen des Anpassungsparameters für das mindestens eine Objekt aus den zwei oder mehr Objekten das Berechnen 220 einer gewichteten Summe für jedes Objekt aus den zwei oder mehr Objekten umfassen. Dabei kann die gewichtete Summe für das Objekt eine Summe von Produkten sein, wobei jedes Produkt ein Produkt einer Funktion eines Erfassungsparameters und eines diesem Erfassungsparameter zugewiesenen Gewichtsfaktors ist. Dadurch können die zwei oder mehr gewichteten Summen für die entsprechenden zwei oder mehr Objekten bestimmt werden. In manchen Fällen kann die Funktion des Erfassungsparameters eine lineare Funktion sein. Zum Beispiel kann das Produkt der Funktion des Erfassungsparameters und des diesem Erfassungsparameter zugewiesenen Gewichtsfaktors ein Produkt des Erfassungsparameters und des diesem Erfassungsparameter zugewiesenen Gewichtsfaktors sein. In einem Fall kann die gewichtete Summe $\beta^m$ für das m-te Objekt durch den folgenden Ausdruck gegeben werden:

$\beta^m = \sum_{j=1}^{R} f_j \cdot r_j^m$ , wobei die Indizes dieselbe Bedeutung haben wie zuvor definiert.

In den Techniken der vorliegenden Offenbarung kann das Berechnen des Anpassungsparameters für das mindestens eine Objekt aus den zwei oder mehr Objekten weiterhin das Bestimmen 230 eines Objektes mit einer besten kollektiven Performanz-Erfassungseigenschaft basierend auf den zwei oder mehr gewichteten Summen umfassen. Zum Beispiel kann die gewichtete Summe, die dem Objekt mit der besten kollektiven Performanz-Erfassungseigenschaft entspricht, einen Maximalwert der zwei oder mehr gewichteten Summen annehmen. Diese gewichtete Summe kann in manchen Fällen als $\beta^{max} = max_{m \in [1,...,M]} \beta^m$ bezeichnet werden.

Des Weiteren kann das Berechnen des Anpassungsparameters für das mindestens eine Objekt aus den zwei oder mehr Objekten das Berechnen 240 einer neuen gewichteten Summe für das mindestens eine Objekt aus den zwei oder mehr Objekten basierend auf der gewichteten Summe für das mindestens eine Objekt und der gewichteten Summe, die dem Objekt mit der besten kollektiven Performanz-Erfassungseigenschaft entsprechen. In einem Fall kann das Berechnen der neuen gewichteten Summe für das mindestens eine Objekt ein Verhältnis der gewichteten Summe für das mindestens eine Objekt zu der gewichteten Summe sein, die dem Objekt mit der besten kollektiven Performanz-Erfassungseigenschaft entspricht. Zum Beispiel lassen sich die neue gewichtete Summe $\theta^m$ für das $m$-te Objekt wie folgt schreiben: $\theta^m = \beta^m / \beta^{max}$. In diesem Fall können die neuen gewichteten Summen als ein Vektor geschrieben werden. Z.B. kann der Vektor $\partial$ durch den folgenden Ausdruck geschrieben werden: $\partial = $

$\frac{1}{\beta^{max}} (\beta^1, ..., \beta^M)^T$ , wobei das Symbol $T$ die Transponierungs-Operation bezeichnet. Ein alternativer Ausdruck für diesen Vektor $\partial$ kann wie folgt lauten:

$\mathcal{O} = (\theta^1, ..., \theta^M)^T$ .

Es sei darauf hingewiesen, dass die Relation zwischen einer Performanz-Erfassungseigenschaft und einem ihr zugeordneten Erfassungsparameter in manchen Fällen anders definiert werden kann als oben beschrieben: z.B. je kleiner ein Erfassungsparameter ist, desto besser kann die mit diesem Erfassungsparameter verbundene Performanz-Erfassungseigenschaft sein. Darüber hinaus kann die Relation zwischen einem Erfassungsparameter und einem ihm zugeordneten Gewichtsfaktor in manchen Fällen anders definiert werden: z.B. je kleiner ein Gewichtsfaktor eines Erfassungsparameters ist, desto wichtiger kann die mit diesem Erfassungsparameter verbundene Performanz-Erfassungseigenschaft sein. In diesem Fall können die Ausdrücke für die neuen gewichteten Summen entsprechend angepasst werden (im Folgendem nicht weiter ausführlicher erläutert).

Des Weiteren kann in den vorliegenden Techniken das Berechnen des Anpassungsparameters für das mindestens eine Objekt aus den zwei oder mehr Objekten (bspw. für alle der zwei oder mehr Objekten) weiterhin das Berechnen 250 des Anpassungsparameters für das mindestens eine Objekt basierend auf der berechneten neuen gewichteten Summe für das mindestens eine Objekt umfassen. In manchen Fällen kann ein Anpassungsparameter in einem vorgegebenen Intervall, [$e,f$], liegen. (Dabei können $e$ und $f$ beliebige reelle Zahlen sein, $e$, $f \in \mathbb{R}$.) Zum Beispiel können sich die Anpassungsparameter in dem Intervall von null bis eins befinden: [0,1]. In manchen Fällen können die Anpassungsparameter die folgende Eigenschaft aufweisen: Je größer die berechnete neue gewichtete Summe für das mindestens eine Objekt ist, desto kleiner kann der Anpassungsparameter für das mindestens eine Objekt sein. Zum Beispiel kann der Anpassungsparameter $\alpha^m$ für das $m$-te Objekt durch den folgenden Ausdruck gegeben werden: $\alpha^m = 1 - \gamma \cdot \theta^m$, wobei $\gamma > 0$ ein vorgegebener Faktor ist und der oben eingeführte Ausdruck für die neue gewichtete Summe $\theta^m$ für das m-te Objekt verwendet wird. In manchen Fällen kann der Faktor $\gamma$ gleich eins sein, $\gamma = 1$.

Schließlich umfasst das Verfahren das Senden 300 des berechneten Anpassungsparameters an das mindestens eine Objekt (bspw. an alle der zwei oder mehr Objekten), um eine verfügbare Ressource für das mindestens eine Objekt zwischen einer Kommunikationsfunktion und einer Erfassungsfunktion dieses Objektes basierend auf dem gesendeten Anpassungsparameter aufzuteilen. Die Aufteilung der verfügbaren Ressource zwischen einer Kommunikationsfunktion und einer Erfassungsfunktion unter Verwendung des Anpassungsparameters kann bspw. an dem mindestens einen Objekt (bspw. an allen der zwei oder mehr Objekten) ausgeführt werden.

In der vorliegenden Offenbarung kann ein minimaler Anteil der verfügbaren Ressource, der für die Erfassungsfunktion zugeordnet ist, gleich null sein, was keiner zugeordneten Ressource für die Erfassungsfunktion entspricht, in welchem Fall ein Anteil der verfügbaren Ressource, der für die Kommunikationsfunktion zugeordnet ist, einen maximalen Wert annimmt, was der Situation entspricht, wenn die verfügbare Ressource nur der Kommunikationsfunktion zugeordnet ist. Alternativ oder zusätzlich kann ein minimaler Anteil der verfügbaren Ressource, der für die Kommunikationsfunktion zugeordnet ist, gleich null sein, was keiner zugeordneten Ressource für die Kommunikationsfunktion entspricht, in welchem Fall ein Anteil der verfügbaren Ressource, der für die Erfassungsfunktion zugeordnet ist, einen maximalen Wert annimmt, was der Situation entspricht, wenn die verfügbare Ressource nur der Erfassungsfunktion zugeordnet ist. In manchen Fällen kann ein Erfassungsanteil der verfügbaren Ressource für das mindestens eine Objekt proportional zu dem berechneten Anpassungsparameter sein.

Zum Beispiel, wenn die verfügbare Ressource ein vorgegebenes Zeitintervall 20 ist, kann das vorgegebene Zeitintervall $T$ zwischen der Kommunikationsfunktion und der Erfassungsfunktion des $m$-ten Objektes anhand eines Anpassungsparameters $\alpha^m$ für dieses Objekt wie folgt geschrieben werden: $T = \alpha^m \cdot T + (1 - \alpha^m) \cdot T$. Dabei entspricht das Zeitintervall $T_{erf} = \alpha^m \cdot T$ einem Zeitintervall, das für die Erfassungsfunktion zugewiesen wurde (gemäß der oben beschriebenen Aufteilung), während $T_{kom} = (1 - \alpha^m) \cdot T$ einem Zeitintervall entspricht, das für die Kommunikationsfunktion zugewiesen wurde. In diesem nicht einschränkendem Beispiel liegt der Anpassungsparameter in dem Intervall von null bis eins, $\alpha^m \in [0,1]$, so dass die beiden Grenzwerte des Anpassungsparameters, $\alpha^m = 0$ und $\alpha^m = 1$, zwei der im vorigen Absatz erwähnten Situationen beschreiben. Auf die gleiche Art und Weise kann eine andere (bspw. jede) verfügbare Ressource für das Objekt zwischen der Kommunikationsfunktion und der Erfassungsfunktion dieses Objektes aufgeteilt werden. Zum Beispiel, wenn die verfügbare Ressource eine vorgegebene Leistung 30 ist, kann die vorgegebene Leistung $P$ zwischen der Kommunikationsfunktion und der Erfassungsfunktion des m-ten Objektes anhand eines Anpassungsparameters $\alpha^m$ für dieses Objekt wie folgt geschrieben werden: $P = \alpha^m \cdot P + (1 - \alpha^m) \cdot P$. Dabei entspricht die Leistung $P_{erf} = \alpha^m \cdot P$ einer Leistung, die für die Erfassungsfunktion zugewiesen wurde (gemäß der oben beschriebenen Aufteilung), während $P_{kom} = (1 - \alpha^m) \cdot P$ einer Leistung entspricht, das für die Erfassungsfunktion zugewiesen wurde.

Alternativ zu der oben beschriebenen Aufteilung, bei der ein minimaler Anteil der verfügbaren Ressource, der für die Erfassungsfunktion oder die Kommunikationsfunktion zugeordnet ist, gleich null sein kann, ist eine andere mögliche Aufteilung der verfügbaren Ressource im Rahmen der vorliegenden Offenbarung denkbar. Für das mindestens eine Objekt kann in manchen Fällen ein statischer Kommunikationsanteil der verfügbaren Ressource und ein statischer Erfassungsanteils der verfügbaren Ressource zugewiesen werden, die unabhängig von dem berechneten Anpassungsparameter sind. Zudem kann für das mindestens eine Objekt ein dynamischer Anteil der verfügbaren Ressource zugewiesen werden, der eine Differenz zwischen der verfügbaren Ressource für das Objekt und den zugewiesenen statischen Kommunikations- und Erfassungsteilen der verfügbaren Ressource für das Objekt ist. Dieser dynamische Anteil der verfügbaren Ressource für das mindestens eine Objekt kann zwischen der Kommunikationsfunktion und der Erfassungsfunktion dieses Objektes basierend auf dem berechneten Anpassungsparameter aufgeteilt werden. Der dynamische Anteil der verfügbaren Ressource für das mindestens eine Objekt kann 20% oder mehr, 50% oder mehr, 90% oder mehr der (gesamten) verfügbaren Ressource betragen. In manchen Fällen kann ein Erfassungsanteil des dynamischen Anteils der verfügbaren Ressource für das mindestens eine Objekt proportional zu dem berechneten Anpassungsparameter sein.

Zum Beispiel, wenn die verfügbare Ressource ein vorgegebenes Zeitintervall 20 ist, kann das vorgegebene Zeitintervall $T$ zwischen der Kommunikationsfunktion und der Erfassungsfunktion des m-ten Objektes anhand eines Anpassungsparameters $\alpha^m$ für dieses Objekt wie folgt geschrieben werden: $T = T_{erf,st} + T_{kom,st} + \alpha^m \cdot T_{dyn} + (1 - \alpha^m) \cdot T_{dyn}$. Dabei entspricht das Zeitintervall $T_{erf,st}$ einem statischen Erfassungsanteils der verfügbaren Ressource, $T_{kom,st}$ einem statischen Kommunikationsanteil der verfügbaren Ressource, und $T_{dyn}$ einem dynamischen Anteil der verfügbaren Ressource (gemäß der oben beschriebenen Aufteilung). Zudem entspricht das Zeitintervall $T_{erf,dyn} = a^m \cdot T_{dyn}$ einem dynamischen Zeitintervall, das für die Erfassungsfunktion zugewiesen wurde, während $T_{kom,dyn} = (1 - \alpha^m) \cdot T_{dyn}$ einem dynamischen Zeitintervall entspricht, das für die Kommunikationsfunktion zugewiesen wurde. (Beide dynamischen Zeitintervalle hängen von dem Anpassungsparameters $\alpha^m$ gemäß den obigen Definitionen ab.) Auf die gleiche Art und Weise kann eine andere (bspw. jede) verfügbare Ressource für das Objekt zwischen einer Kommunikationsfunktion und einer Erfassungsfunktion dieses Objektes aufgeteilt werden (bspw. für die Leistung P).

In beiden beschriebenen Fällen für die Aufteilung der verfügbaren Ressource kann die folgende Aussage gelten: Je kleiner der Anpassungsparameter des m-ten Objektes $\alpha^m$ ist, desto besser ist die mit diesem Anpassungsparameter verbundene Performanz-Erfassungseigenschaft des m-ten Objektes. Folglich kann ein solches Objekt mehr verfügbare Ressource für die Kommunikationsfunktion im Vergleich zu der Erfassungsfunktion ausgeben. Diese Tendenz ist auch aus den obigen beispielhaften Ausdrücken ersichtlich: $T_{erf} = \alpha^m \cdot T$ und $T_{erf,dyn} = \alpha^m \cdot T_{dyn}$.

Im Rahmen der vorliegenden Offenbarung ist es denkbar, dass das Verfahren für eine Anzahl von Zyklen, beginnend mit dem ersten Zyklus der Anzahl von Zyklen (bspw. für k = 1 in den Notationen der **Fig. 3a** und **3b),** ausgeführt werden kann. In diesem Fall kann das Verfahren das Empfangen 400 von Informationen umfassen, die sich auf die Performanz-Erfassungseigenschaften der zwei oder mehr Objekte beziehen, von den zwei oder mehr Objekten für einen aktuellen Zyklus. Diese Informationen, können z.B. durch das "Modul" 10 empfangen werden (wie oben bereits diskutiert). Der aktuelle Zyklus kann z.B. der $k$-Zyklus der **Fig. 3a** und **3b** sein, wobei $k$ eine natürliche Zahl ist, $k \in \mathbb{N}$. Des Weiteren kann das Verfahren das Berechnen 500 des Anpassungsparameters für das mindestens eine Objekt aus den zwei oder mehr Objekten (bspw. für alle der zwei oder mehr Objekten) für den aktuellen Zyklus umfassen. Anschließend kann das Verfahren das Senden 600 des für den aktuellen Zyklus berechneten Anpassungsparameters für das mindestens eine Objekt an das mindestens eine Objekt (bspw. an alle der zwei oder mehr Objekten) umfassen. Darüber hinaus kann es sein, dass der für den aktuellen Zyklus berechnete Anpassungsparameter für einen nachfolgenden Zyklus, der in Bezug auf den aktuellen Zyklus nachfolgend ist, verwendet werden soll, um die verfügbare Ressource für das Objekt zwischen der Kommunikationsfunktion und der Erfassungsfunktion dieses Objektes für den nachfolgenden Zyklus aufzuteilen. Der nachfolgende Zyklus kann z.B. der $k$ + 1-Zyklus sein, der in den **Fig. 3a** und **3b** dargestellt ist. In manchen Fällen kann die verfügbare Ressource für das Objekt zwischen der Kommunikationsfunktion und der Erfassungsfunktion dieses Objektes für jeden Zyklus der Anzahl von Zyklen unverändert bleiben (bspw. können das Zeitintervall in **Fig. 3a** und die Leistung $P$ in **Fig. 3b** für die Zyklen $k$ und $k$ + 1 unverändert bleiben). Die Aufteilung der verfügbaren Ressource zwischen einer Kommunikationsfunktion und einer Erfassungsfunktion unter Verwendung des Anpassungsparameters kann auf der Objektseite erfolgen (wie bereits oben beschrieben).

Die verschiedenen Aspekte der Aufteilung der verfügbaren Ressource für den Fall, die weiter oben für den Fall erläutert wurden, in dem keine Zyklen diskutiert wurden, können in ähnlicher Weise auf den im vorigen Absatz beschriebenen Fall mit Zyklen anwendbar sein.

Ein zweiter allgemeiner Aspekt der vorliegenden Offenbarung betrifft ein Computer-Programm, das dazu ausgelegt ist, um das Verfahren gemäß dem ersten allgemeinen Aspekt der vorliegenden Offenbarung auszuführen. Die vorliegende Offenbarung betrifft auch ein computer-lesbares Medium (z.B. ein maschinenlesbares Speichermedium wie beispielsweise ein optisches Speichermedium oder Festspeicher, z.B. FLASH-Speicher) und Signale, die das Computer-Programm der vorliegenden Offenbarung speichern oder codieren.

Ein dritter allgemeiner Aspekt der vorliegenden Offenbarung betrifft ein Modul 10, das dazu ausgelegt ist, um das Verfahren zum Aufteilen von verfügbaren Ressourcen in Bezug auf die Kommunikations- und Erfassungsfunktionen von Objekten gemäß dem ersten allgemeinen Aspekt auszuführen und/oder das Computer-Programm gemäß dem zweiten allgemeinen Aspekt auszuführen.

Das "Modul" der vorliegenden Techniken kann ein Teil des Rechnersystems sein oder ein ganzes Rechnersystem umfassen. Das "Modul" kann eine Hardwareeinheit sein, welche über eigenen Speicher, eine vorkonfigurierte Hardware-Logik, ein oder mehrere Register und eine interne Datenverbindung verfügen kann. (Ein Register kann bspw. Speicherbereiche enthalten oder diese beschreiben.) Zudem kann ein "Modul" eine oder mehrere Schnittstellen nach außen aufweisen, z.B. zu einem Rechenkern und/oder zu einer oder mehreren Kommunikationsverbindungen.

In manchen Fällen kann das "Modul" als eigenständiges Modul konzipiert sein, das sich außerhalb von "Straßeninfrastrukturen", "Fahrzeugen", oder anderen "Vorrichtungen" befindet. In diesem Fall kann der weiter oben eingeführte Informationsaustausch zwischen dem "Modul" und "Objekten" bspw. über eine Basisstation (bspw. 5G- oder 6G-Verbindung) erfolgen.

In einem anderen Beispiel kann das "Modul" in ein "Fahrzeug" (z.B. in seinen Fahrzeugrechner) der zwei oder mehr Objekte integriert sein. In einem Fall kann der weiter oben eingeführte Informationsaustausch zwischen dem "Modul" und "Objekten" über eine Basisstation (bspw. 5G- oder 6G-Verbindung) erfolgen. Alternativ oder zusätzlich kann der Informationsaustausch zwischen dem "Modul" und "Objekten" unter Verwendung von "Sidelink-Kommunikation" realisiert werden (wenn z.B. die Basisstation nicht vorhanden ist oder wenn sie sich außerhalb der Reichweite der "Objekte" befindet). Im Rahmen der vorliegenden Offenbarung ist es auch denkbar, dass mehr als ein "Fahrzeug" ein "Modul" umfasst (bspw. das Modul derselben Bauart), so dass zu einem Zeitpunkt ein Modul eines Fahrzeuges (z.B. eines intelligenten Fahrzeugs) den Informationsaustausch zwischen dem "Modul" und "Objekten" bereitstellt, während zu einem anderen Zeitpunkt ein Modul eines anderen Fahrzeugs den Informationsaustausch bereitstellt. Mit anderen Worten, ein "Fahrzeug", das mit dem jeweiligen "Modul" ausgestattet ist, kann in manchen Fällen dynamisch ausgewählt werden (d.h. in Echtzeit, wenn die "Objekte" in Betrieb sind), um bspw. einen optimierten Informationsaustausch mittels "Sidelink-Kommunikation" zwischen dem "Modul" und den "Objekten" zu ermöglichen (bspw. um einen Informationsaustausch zwischen dem Modul und allen der zwei oder mehr Objekte zu gewährleisten).

In manchen Fällen kann das "Modul" in eine "Straßeninfrastruktur" oder eine andere "Vorrichtung" der zwei oder mehr Objekte integriert sein. In diesem Fall kann der Informationsaustausch zwischen dem "Modul" und den "Objekten" auf ähnliche Weise stattfinden, wie oben im Zusammenhang mit dem in ein Fahrzeug integrierten "Modul" bereits erläutert.

Zudem kann das Modul des dritten Aspekts dazu ausgelegt sein, um den berechneten Anpassungsparameter für das mindestens eine Objekt aus den zwei oder mehr Objekten an das mindestens eine Objekt (bspw. an alle der zwei oder mehr Objekte) zu übertragen.

Ein vierter allgemeiner Aspekt der vorliegenden Offenbarung betrifft zwei oder mehr Objekte, wobei jedes Objekt von zwei oder mehr Objekten ein Fahrzeug, eine Straßeninfrastruktur, oder eine andere Vorrichtung ist. Die zwei oder mehr Objekte können intelligente Verkehrssysteme sein oder mit solchen Systemen ausgestattet sein. Zudem sind die zwei oder mehr Objekte des vierten Aspekts dazu ausgelegt, um ihre jeweilige Umgebung zu erfassen und Informationen an ein Modul gemäß dem dritten Aspekt zu senden. Darüber hinaus ist mindestens ein Objekt der zwei oder mehr Objekte dazu ausgelegt, um einen berechneten Anpassungsparameter für das mindestens eine Objekt aus den zwei oder mehr Objekten von dem Modul zu empfangen. Zudem ist das mindestens eine Objekt dazu ausgelegt, um eine verfügbare Ressource für das mindestens eine Objekt zwischen einer Kommunikationsfunktion und einer Erfassungsfunktion dieses Objektes basierend auf dem berechneten Anpassungsparameter aufzuteilen.

In den Techniken der vorliegenden Offenbarung kann jedes der zwei oder mehr Objekte dazu ausgelegt sein, um seine eine oder mehrere Performanz-Erfassungseigenschaften zu bestimmen.

Zudem können die zwei oder mehr Objekte des vierten Aspekts dazu ausgelegt sein, um ein Erfassungsparameter für jede Performanz-Erfassungseigenschaft der einen oder mehreren Performanz-Erfassungseigenschaften zuzuweisen, wodurch ein Satz von Erfassungsparametern für jedes Objekt der zwei oder mehr Objekte gebildet wird. Darüber hinaus können die zwei oder mehr Objekte des vierten Aspekts dazu ausgelegt sein, um: eine Nachricht von jedem Objekt der zwei oder mehr Objekte, die Informationen über die eine oder mehrere Performanz-Erfassungseigenschaften des Objektes enthält, zu erzeugen; und die Nachrichten von den zwei oder mehr Objekten an das Modul zu senden. Die Nachricht (bspw. jede Nachricht) kann, wie oben bereits besprochen, eine CAM-Nachricht oder eine CPM-Nachricht sein.

**Patentansprüche**

1. Verfahren zum Aufteilen von verfügbaren Ressourcen in Bezug auf die Kommunikations- und Erfassungsfunktionen von Objekten, wobei jedes Objekt von zwei oder mehr Objekten ($A_1$, $A_2$, $A_{M-1}$, $A_M$) ein Fahrzeug, eine Straßeninfrastruktur, oder eine andere Vorrichtung ist, das dazu ausgelegt ist, ihre jeweilige Umgebung zu erfassen, wobei das Verfahren umfasst:

   Empfangen (100) von Informationen, die sich auf Performanz-Erfassungseigenschaften der zwei oder mehr Objekte beziehen, von den zwei oder mehr Objekten, wobei jedes der zwei oder mehr Objekte eine oder mehrere Performanz-Erfassungseigenschaften aufweist und dazu ausgelegt ist, Informationen über seine eine oder mehrere Performanz-Erfassungseigenschaften bereitzustellen; Berechnen (200) eines Anpassungsparameters für mindestens ein Objekt aus den zwei oder mehr Objekten basierend auf den in Bezug auf die Performanz-Erfassungseigenschaften der zwei oder mehr Objekte empfangenen Informationen, wobei der Anpassungsparameter verwendet werden soll, um eine verfügbare Ressource für das mindestens eine Objekt zwischen einer Kommunikationsfunktion und einer Erfassungsfunktion dieses Objektes aufzuteilen,

Senden (300) des berechneten Anpassungsparameters an das mindestens eine Objekt, um eine verfügbare Ressource für das mindestens eine Objekt zwischen einer Kommunikationsfunktion und einer Erfassungsfunktion dieses Objektes basierend auf dem gesendeten Anpassungsparameter aufzuteilen.

2. Verfahren nach Anspruch 1, wobei das Empfangen von Informationen, die sich auf die Performanz-Erfassungseigenschaften der zwei oder mehr Objekte beziehen, das Empfangen (120) von Erfassungsparametern für jedes Objekt der zwei oder mehr Objekte umfasst, wobei ein Erfassungsparameter jeder Performanz-Erfassungseigenschaft der einen oder mehreren Performanz-Erfassungseigenschaften des Objektes zugewiesen ist, wodurch ein Satz von Erfassungsparametern für jedes Objekt der zwei oder mehr Objekte gebildet wird.

3. Verfahren nach Anspruch 2, wobei das Empfangen von Informationen, die sich auf die Performanz-Erfassungseigenschaften der zwei oder mehr Objekte beziehen, das Empfangen von Nachrichten ($L_1$, $L_2$, $L_{M-1}$, $L_M$) umfasst, die von den zwei oder mehr Objekten gesendet werden.

4. Verfahren nach einem der vorhergehenden Ansprüche 1 bis 3, wobei das Berechnen des Anpassungsparameters für das mindestens eine Objekt aus den zwei oder mehr Objekten die folgenden Schritte umfasst:

Zuweisen (210) eines Gewichtsfaktors für jeden Erfassungsparameter des Satzes von Erfassungsparametern;
Berechnen (220) einer gewichteten Summe für jedes Objekt aus den zwei oder mehr Objekten, wobei die gewichtete Summe für das Objekt eine Summe von Produkten ist, wobei jedes Produkt ein Produkt einer Funktion eines Erfassungsparameters und eines diesem Erfassungsparameter zugewiesenen Gewichtsfaktors ist, wodurch die zwei oder mehr gewichteten Summen für die entsprechenden zwei oder mehr Objekten bestimmt werden.

5. Verfahren nach Anspruch 4, wobei das Berechnen des Anpassungsparameters für das mindestens eine Objekt aus den zwei oder mehr Objekten weiterhin die folgenden Schritte umfasst:

Bestimmen (230) eines Objektes mit einer besten kollektiven Performanz-Erfassungseigenschaft basierend auf den zwei oder mehr gewichteten Summen;
Berechnen (240) einer neuen gewichteten Summe für das mindestens eine Objekt aus den zwei oder mehr Objekten basierend auf der gewichteten Summe für das mindestens eine Objekt und der gewichteten Summe, die dem Objekt mit der besten kollektiven Performanz-Erfassungseigenschaft entspricht.

6. Verfahren nach Anspruch 5, wobei das Berechnen des Anpassungsparameters für das mindestens eine Objekt aus den zwei oder mehr Objekten weiterhin das Berechnen (250) des Anpassungsparameters für das mindestens eine Objekt basierend auf der berechneten neuen gewichteten Summe für das mindestens eine Objekt umfasst.

7. Verfahren nach einem der vorhergehenden Ansprüche 1 bis 6, wobei die verfügbare Ressource für das Objekt ein vorgegebenes Zeitintervall (20) ist, das zwischen der Kommunikationsfunktion und der Erfassungsfunktion des Objektes aufgeteilt ist, und/oder
die verfügbare Ressource für das Objekt eine vorgegebene Leistung (30) ist, die zwischen der Kommunikationsfunktion und der Erfassungsfunktion des Objektes aufgeteilt wird.

8. Verfahren nach einem der vorhergehenden Ansprüche 1 bis 7, wobei ein minimaler Anteil der verfügbaren Ressource, der für die Erfassungsfunktion zugeordnet ist, gleich null ist, was keiner zugeordneten Ressource für die Erfassungsfunktion entspricht, in welchem Fall ein Anteil der verfügbaren Ressource, der für die Kommunikationsfunktion zugeordnet ist, einen maximalen Wert annimmt, was der Situation entspricht, wenn die verfügbare Ressource nur der Kommunikationsfunktion zugeordnet ist, und/oder wobei ein minimaler Anteil der verfügbaren Ressource, der für die Kommunikationsfunktion zugeordnet ist, gleich null ist, was keiner zugeordneten Ressource für die Kommunikationsfunktion entspricht, in welchem Fall ein Anteil der verfügbaren Ressource, der für die Erfassungsfunktion zugeordnet ist, einen maximalen Wert annimmt, was der Situation entspricht, wenn die verfügbare Ressource nur der Erfassungsfunktion zugeordnet ist.

9. Verfahren nach einem der vorhergehenden Ansprüche 1 bis 7, wobei für das mindestens eine Objekt ein statischer Kommunikationsanteil der verfügbaren Ressource und ein statischer Erfassungsanteils der verfügbaren Ressource zugewiesen werden, die unabhängig von dem berechneten Anpassungsparameter sind,

wobei für das mindestens eine Objekt ein dynamischer Anteil der verfügbaren Ressource zugewiesen wird, der eine Differenz zwischen der verfügbaren Ressource für das Objekt und den zugewiesenen statischen Kommunikations- und Erfassungsteilen der verfügbaren Ressource für das Objekt ist, und

wobei der dynamische Anteil der verfügbaren Ressource für das mindestens eine Objekt zwischen der Kommunikationsfunktion und der Erfassungsfunktion dieses Objektes basierend auf dem berechneten Anpassungsparameter aufgeteilt wird.

10. Verfahren nach einem der vorhergehenden Ansprüche 1 bis 9, wobei das Verfahren für eine Anzahl von Zyklen, beginnend mit dem ersten Zyklus der Anzahl von Zyklen, ausgeführt wird, und weiter umfasst:

Empfangen (400) von Informationen, die sich auf die Performanz-Erfassungseigenschaften der zwei oder mehr Objekte beziehen, von den zwei oder mehr Objekten für einen aktuellen Zyklus;

Berechnen (500) des Anpassungsparameters für das mindestens eine Objekt aus den zwei oder mehr Objekten für den aktuellen Zyklus;

Senden (600) des für den aktuellen Zyklus berechneten Anpassungsparameters für das mindestens eine Objekt an das mindestens eine Objekt,

wobei der für den aktuellen Zyklus berechnete Anpassungsparameter für einen nachfolgenden Zyklus, der in Bezug auf den aktuellen Zyklus nachfolgend ist, verwendet werden soll, um die verfügbare Ressource für das Objekt zwischen der Kommunikationsfunktion und der Erfassungsfunktion dieses Objektes für den nachfolgenden Zyklus aufzuteilen.

11. Ein Computer-Programm, das dazu ausgelegt ist, um das Verfahren nach einem der vorhergehenden Ansprüche 1 bis 10 auszuführen.

12. Ein Modul (10), das dazu ausgelegt ist, um das Verfahren zum Aufteilen von verfügbaren Ressourcen in Bezug auf die Kommunikations- und Erfassungsfunktionen von Objekten nach einem der vorhergehenden Ansprüche 1 bis 10 auszuführen und/oder das Computer-Programm nach Anspruch 11 auszuführen.

13. Das Modul (10) nach Anspruch 12, das dazu ausgelegt ist, um den berechneten Anpassungsparameter für das mindestens eine Objekt aus den zwei oder mehr Objekten an das mindestens eine Objekt zu übertragen.

14. Zwei oder mehr Objekte, wobei jedes Objekt von zwei oder mehr Objekten ($A_1$, $A_2$, $A_{M-1}$, $A_M$) ein Fahrzeug, eine Straßeninfrastruktur, oder eine andere Vorrichtung ist,

wobei die zwei oder mehr Objekte dazu ausgelegt sind, um ihre jeweilige Umgebung zu erfassen und Informationen an ein Modul (10) nach Anspruch 12 oder 13 zu senden,

wobei mindestens ein Objekt der zwei oder mehr Objekte dazu ausgelegt ist, um: einen berechneten (200) Anpassungsparameter für das mindestens eine Objekt aus den zwei oder mehr Objekten von dem Modul zu empfangen; und

eine verfügbare Ressource für das mindestens eine Objekt zwischen einer Kommunikationsfunktion und einer Erfassungsfunktion dieses Objektes basierend auf dem berechneten Anpassungsparameter aufzuteilen.

15. Die zwei oder mehr Objekte nach Anspruch 14, wobei jedes der zwei oder mehr Objekte dazu ausgelegt ist, um seine eine oder mehrere Performanz-Erfassungseigenschaften zu bestimmen.

Fig. 1a

| 100 | → | 200 | → | 300 | → | 400 | → | 500 | → | 600 |

Fig. 1b

| 100 | → | 120 |

Fig. 1c

| 200 | → | 210 | → | 220 | → | 230 | → | 240 | → | 250 |

# Fig. 2

EP 4 535 761 A1

EP 4 535 761 A1

## Fig. 3a

21  22  23  24

| $T_{k,erf}$ | $T_{k,kom}$ | $T_{k+1,erf}$ | $T_{k+1,kom}$ |

$T_k = T$   $T_k = T$

20   20

## Fig. 3b

30

P

31 → $P_{k,kom}$

32 → $P_{k,erf}$

33 → $P_{k+1,kom}$

34 → $P_{k+1,erf}$

...   ...

k

Europäisches
Patentamt

European
Patent Office

Office européen
des brevets

# EUROPÄISCHER RECHERCHENBERICHT

**Nummer der Anmeldung**

EP 23 20 1780

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 115 166 711 A (HARBIN INST TECHNOLOGY WEIHAI) 11. Oktober 2022 (2022-10-11) <br> * Absätze [0005], [0089] * <br> * Absatz [0105] – Absatz [0106] * <br> * Abbildungen 1, 2 * <br> ----- | 1-15 | INV. <br> H04L67/12 |
| A | US 2021/063546 A1 (SLOBODYANYUK VOLODIMIR [US] ET AL) 4. März 2021 (2021-03-04) <br> * Absatz [0020] – Absatz [0030] * <br> ----- | 1-15 | |

**RECHERCHIERTE SACHGEBIETE (IPC)**

H04L
H04W
G08G

Der vorliegende Recherchenbericht wurde für alle Patentansprüche erstellt

| Recherchenort | Abschlußdatum der Recherche | Prüfer |
|---|---|---|
| Den Haag | 20. Februar 2024 | Oechsner, Simon |

EPO FORM 1503 03.82 (P04C03)

# EP 4 535 761 A1

## ANHANG ZUM EUROPÄISCHEN RECHERCHENBERICHT
## ÜBER DIE EUROPÄISCHE PATENTANMELDUNG NR.

EP 23 20 1780

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2024

| Im Recherchenbericht angeführtes Patentdokument | Datum der Veröffentlichung | Mitglied(er) der Patentfamilie | Datum der Veröffentlichung |
|---|---|---|---|
| CN 115166711 A | 11-10-2022 | KEINE | |
| US 2021063546 A1 | 04-03-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- *RICHTLINIE 2010/40/EU DES EUROPÄISCHEN PARLAMENTS UND DES RATES*, 07 July 2010